# EUROPEAN PATENT SPECIFICATION

(11) **EP 0 743 010 B1**
(45) Date of publication and mention of the grant of the patent: **05.12.2001**
(21) Application number: 96201147.4
(22) Date of filing: 26.04.1996
(51) Int. Cl.: A22C 29/02, A22C 25/12

(54) **Method and apparatus for peeling shrimp**
Verfahren und Vorrichtung zum Schälen von Garnelen
Procédé et dispositif pour le pelage de crevettes

(30) Priority: 28.04.1995 NL 1000255
(43) Date of publication of application: 20.11.1996
(73) Proprietor: Kant, Albert, 9934 EG Delfzijl (NL)
(72) Inventor: Kant, Albert, 9934 EG Delfzijl (NL); Kant, Klaas Berend, 9932 HX Delfzijl (NL)
(74) Representative: Smulders, Theodorus A.H.J., Ir.

(56) References cited:
- DE-A- 2 515 290
- FR-A- 1 536 270
- US-A- 2 987 759
- US-A- 2 988 771
- US-A- 3 018 510
- US-A- 3 135 015
- US-A- 3 276 878
- US-A- 3 576 047
- US-A- 3 921 256
- US-A- 4 004 321
- US-A- 4 202 077

## Description

The invention relates to a method and apparatus for peeling shrimp.

After catching, shrimp are usually cooked already on board the fishing vessel, and then, normally on shore, peeled. Traditionally, the peeling of the shrimp was done by hand, and also at present, a large part of the food shrimp are peeled by hand. However, the peeling of shrimp is rather labor-intensive and further requires relatively much conveying capacity, because the shrimp to be peeled should be conveyed to the peeling stations and back again. In the past, various attempts have been made to construct shrimp-peeling machines which can peel shrimp automatically and mechanically. Although various shrimp-peeling machines are known from practice, which operate fairly satisfactory, the known machines nevertheless involve a spoilage of 10% or more, while the known machines are often not suitable for all types of shrimp. The improperly peeled should be intercepted by check personnel and as yet be peeled or removed manually. Moreover, the known shrimp-peeling machines are relatively complicated in terms of construction and hence difficult to maintain and clean.

FR-A-1536270 discloses a shrimp peeling apparatus in which a shrimp is placed in stretched position with its back at the upper side in the nip between two adjacent rollers. Above said nip two holding strips are positioned which will hold a shrimp in the nip and between which an open slit is maintained. Further holding means are provided adjacent the end faces of the rollers for clamping the tail of a shrimp. Above the nip and the open slit between the holding strips a movable rotary saw blade is provided for making an incision in the dorsal area of the shrimps carapace. Subsequently the rollers are rotated in order to squeeze the shrimps flesh out of the carapace. However, because of the holding means for the tail the last segment of the carapace is not removed.

The object of the invention is to overcome the drawbacks outlined and more generally to provide a method for peeling shrimp which is relatively simple and which can be mechanized in a relatively simple manner, and a robust, efficient and reliable apparatus for peeling shrimp. To this end, according to the invention, a method for peeling shrimp is characterized in that the shrimp to be peeled are placed in curved form on a supporting surface and that a shifting pressure force is exerted on each of the shrimp by means of a press member, which pressure force moves from the head and tail located on one side of the curved shrimp in the direction of the back, with the armature of the shrimp opening on the backside and the meat being squeezed from the armature.

In accordance with the invention, a shrimp peeling apparatus is characterized by a peeling zone, a substantially horizontal supporting surface for supporting the curved shrimp to be peeled in said peeling zone, conveyor means for successively feeding shrimps to the peeling zone, and a press member positioned above the supporting surface in the peeling zone, said press member being movably arranged with respect to the supporting surface and a shrimp positioned on the supporting surface for gradually compressing said shrimp between the member and the supporting surface from the head and tail towards the back of the shrimp whereby the meat of the shrimp is squeezed out of its armature.

Hereinafter, the invention will be further described with reference to the accompanying drawings.
Figure 1 schematically illustrates the peeling principle underlying the present invention;
figure 2 schematically shows, in perspective, a first example of an apparatus according to the invention;
figure 3 schematically shows, in perspective, a more elaborated second example of an apparatus according to the invention;
figure 4 schematically shows, in side elevation, an example of a vertical conveyor suitable for use in an apparatus according to the invention;
figure 5 schematically shows, in side elevation, an example of a sliding chute for use in an apparatus according to the invention; and
figure 6 schematically shows, in side elevation, an example of a directing chute for use in an apparatus according to the invention.

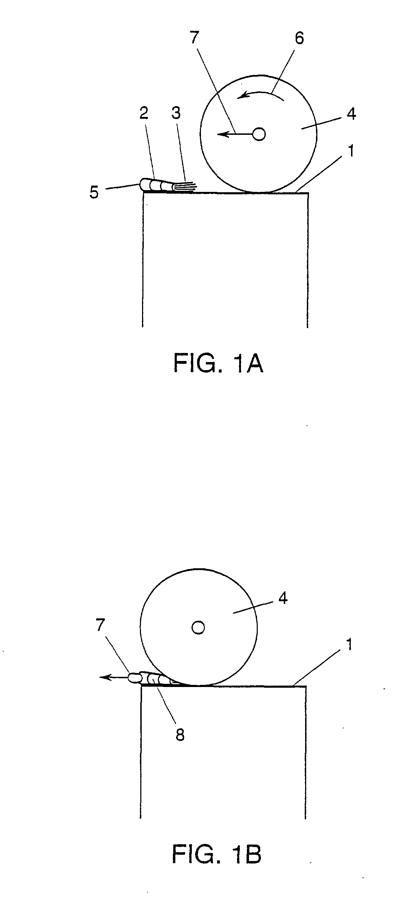

Figure 1 schematically illustrates the peeling principle underlying the invention. The invention is based on the insight that it is possible to squeeze a shrimp from its armature, usually called shell, if the pressure force is exerted in a proper manner. A (cooked) shrimp has a curved form, the head and the tail lying together and the back being directed away from the head and the tail. One could say that a shrimp is about C-shaped or U-shaped, while the two free outer ends can be somewhat closer together and are formed by the head and the tail. Experiments have now shown that if on such a shrimp a pressure force is exerted shifting from the head and the tail in the direction of the back, the meat of the shrimp can be squeezed outwards through the rings of the dorsal armature without the meat being crushed or flattened. Moreover, it has appeared that this technique is suitable for shrimp of all types and dimensions.

Fig. 1A shows a supporting surface 1, for instance the top face of a table or the like on which a shrimp 2 is disposed. The shrimp has its head and tail 3 pointing towards a press member 4 and has its back 5 facing away from the press member. In this example, the press member comprises a movable roller which, rolling across the supporting surface, can be moved towards the shrimp 2, as is indicated by arrows 6,7. However, the press member may also be designed differently, for instance as a roller segment or another bent surface with or without a varying curvature radius. When the press member has reached the shrimp and is then moved further, the shrimp is gradually compressed further and further between the press member and and supporting surface. This involves the armature breaking open at the back and the meat being squeezed from the burst armature. This is shown schematically in Fig. 1B, wherein the meat 7 is shown to be already partly squeezed from the armature 8.

In Fig. 1, the shrimp has its back lying at the edge of the supporting surface. The meat then falls from the supporting surface and can be received in a tray or the like. However, for squeezing the meat from the shell it is in itself not necessary that the shrimp lies at the edge of a supporting surface. Other methods for collecting and/or discharging the peeled shrimp are conceivable.

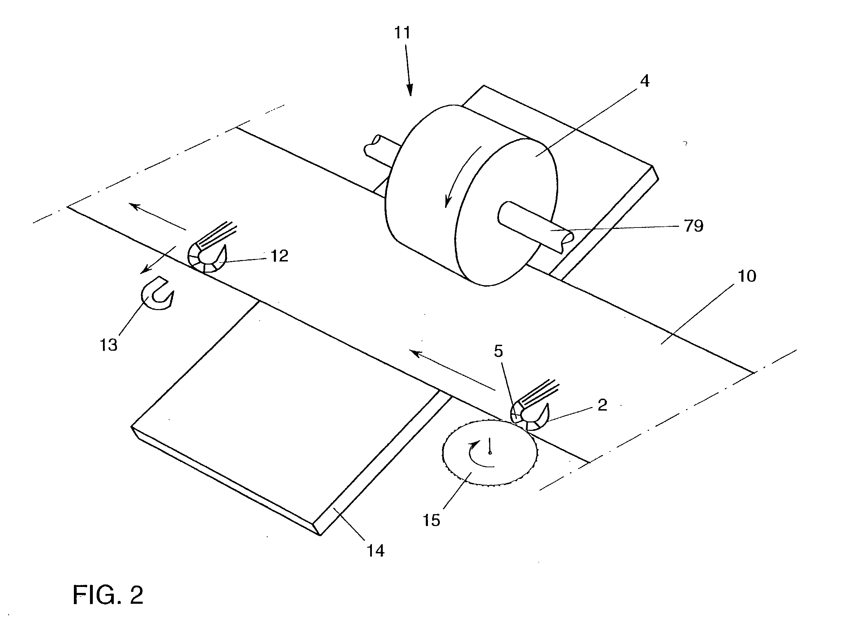

Fig. 2 shows in a highly schematic form an example of an apparatus for peeling shrimp according to the invention. The apparatus shown comprises a conveyor, such as for instance a conveyor belt 10 via which the shrimp 2 to be peeled are fed to a peeling zone 11. The shrimp have their backs 5 lying adjacent the longitudinal edge of the belt 10. In principle, the shrimp can be placed in the desired position on the belt by hand, yet, preferably, the shrimp are placed in the proper position mechanically by means of automatic positioning means, not shown in Fig. 2. An example of such positioning means will be further described hereinbelow.

When a shrimp is located in the peeling zone 11, a suitable press member, which in the example shown has again the form of a roller, such as the roller 4 of Fig. 1, is moved towards the shrimp in order to squeeze the meat from the shell in the above-described manner. At least in the peeling zone 11, the conveyor belt 10 is supported by a supporting member 14. Next, the roller is withdrawn again. When it leaves the peeling zone, the peeled shrimp is released from the shell. The shell remains lying on the belt, as is indicated at 12. The peeled shrimp falls from the belt as indicated at 13 and is received by means not further shown for being further processed. The further processing may for instance include rinsing the peeled shrimp and sieving them, and packing in amounts of a predetermined weight.

The press member should be of such design and/or moved in such a manner, that during the exertion of the pressure force, the shrimp to be peeled indeed remain in position and are not for instance pushed ahead of the press member, so that the pressure force cannot be exerted properly. This object can be realized through the use of a press member having a great radius relative to the thickness of a shrimp. When a roller is used, the radius of the roller can for instance be to the order of 7.5-10 cm or more. It is also possible to construct the surface on which the shrimp is disposed, hence the supporting surface 1 of Fig. 1 or the conveyor belt 10 of Fig. 2 or the like, and/or the surface of the press member so that it has an increased friction coefficient. As will be further described hereinbelow, the conveyor belt can for instance consist of or be provided with emery cloth, fitted with the rough side outwards. The press member can likewise be provided with emery cloth. Other friction-increasing means or surfaces can be used as well.

It is also possible to provide a strip of supple material between the press member proper and the shrimp, via which strip the press member presses on the shrimp. In that case, that strip of material may have its side facing the shrimp provided with a friction-increasing surface.

In principle, when friction-increasing means and/or surfaces are used, the radius of the press member can be smaller than in the case where no friction-increasing means, or means increasing the friction to a lesser degree, are used.

Depending on the speed of travel of the conveyor belt and the speed at which the press member can be reciprocated to peel a shrimp, the conveyor belt can, if necessary, be stopped each time during the peeling operations proper.

It has been found that at least for particular types of shrimp an improved peeling result can be obtained if, prior to the peeling operation proper, the shrimp are incised on their backsides with a cut extending transversely to the rings of the armature. The chance that parts of the armature stick to the peeled shrimp is then smaller.

In Fig. 2, by 15, a rotating cutting member is shown schematically and by way of example, which cutting member can for instance be a small circular saw, disposed next to the conveyor belt in a plane extending substantially parallel to the top face of the conveyor belt and capable of providing the shrimp, on the backsides thereof, with an incision. A slightly oblique position of the cutting member is also possible.

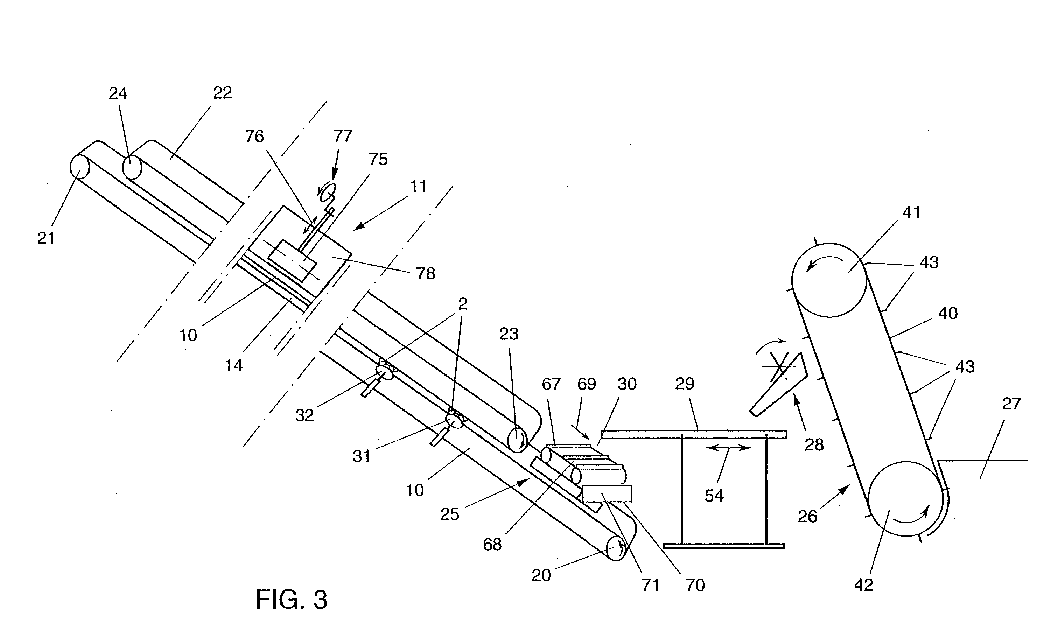

Fig. 3 schematically shows in more detail and in perspective an example of a shrimp peeling machine according to the invention. The apparatus shown again comprises a conveyor belt 10, on which the shrimp are fed to a peeling zone 11. The conveyor belt 10 can for instance consist of emery cloth passed over two return pulleys 20,21, one of which, in operation, is driven.

In this example, a second conveyor belt 22 is arranged above the conveyor belt 10, which second conveyor belt 22 can also consist of emery cloth or another suitable material passed over return pulleys 23,24, one of which, in operation, is again driven. The bottom path of the upper conveyor belt lies directly above the top path of the lower conveyor belt and has the same direction of travel as the top path of the lower conveyor belt.

In the example shown, the lower conveyor belt 10 is longer than the upper conveyor belt 22, so that the lower conveyor belt has, at the feed side thereof, a starting section 25 not yet overhung by the upper conveyor belt 22. The starting section 25 offers the possibility of placing the shrimp to be peeled in the desired position on the lower conveyor belt 10.

Although in principle it would be possible to place the shrimp on the conveyor belt 10 by hand, mechanized feed and positioning means are preferably used. In the example shown, the feed and positioning means comprise a vertical conveyor 26 which can pick up the shrimp from a storage 27, a sliding chute 28, a directing chute 29, and a positioning belt 30. The feed and positioning means will be further described hereinbelow. When the shrimp are placed on the conveyor belt with their backs adjacent the edge of the conveyor belt 10, the shrimp are conveyed in the direction of the peeling zone 11. After leaving the starting section 25, the shrimp reach the second conveyor belt 22 disposed above the conveyor belt 10. The bottom path of the second conveyor belt presses the shrimp on the first conveyor belt, so that the shrimp between the two conveyor belts are retained in the position defined by the positioning means and are in that position fed to the peeling zone. When the shrimp are located between the two conveyor belts, the shrimp can have their backsides provided with an incision, as is described hereinabove. In the example shown, a cutting member 32 is provided for this purpose, preceded by a positioning member 31 capable of correcting the position of a shrimp on the belt, if necessary.

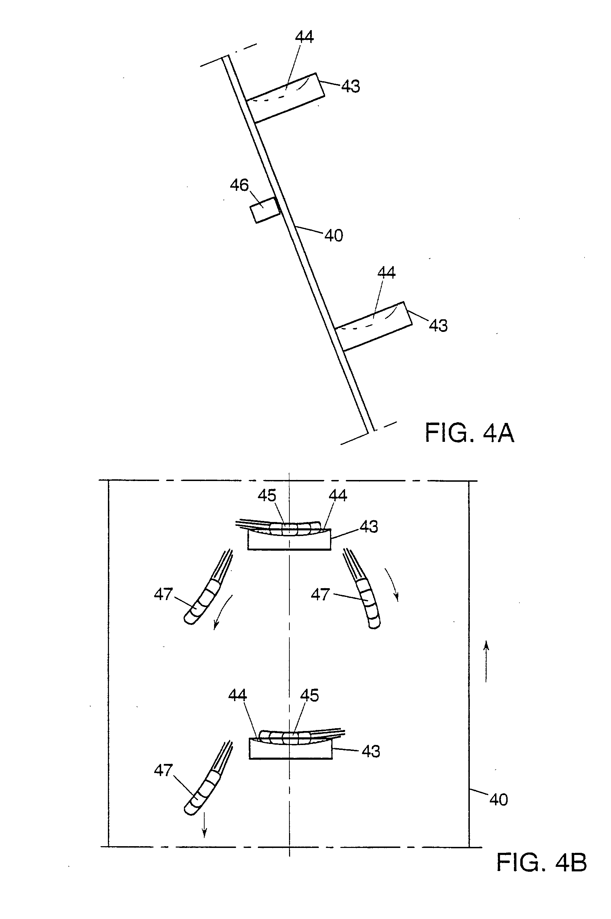

Fig. 4 schematically shows, in side elevation and in front view, a part of an example of a vertical conveyor 26 for use in an apparatus according to the invention. The vertical conveyor shown in Figs. 1 and 4 comprises an endless belt 40 or the like of a suitable material. The belt can be manufactured from supple material, for instance rubber, but may also be built up from hingedly interconnected parts, for instance in the form of a bar conveyor. The endless belt is passed over two return pulleys 41,42, one of which is coupled to driving means. If so desired, the return pulleys may comprise chain wheels and be coupled to each other via one or more chains. The conveying path extends upwards rather steeply from the storage of shrimp 27 dumped in a suitable container. At regular distances, the belt comprises pick-up trays 43 for the shrimp.

The pick-up trays 43 are shaped so that per tray only one shrimp can be carried along. For this purpose, as is shown in Fig. 4A and Fig. 4B, the trays have the shape of a shallow recess 44 capable of receiving precisely one shrimp 45. To prevent the situation that nevertheless more than one shrimp remain lying on a tray 43, the belt 40, in operation, is vibrated by means of a vibrating device schematically shown in Fig. 4B at 46. Excess shrimp fall from the trays, as is indicated in Fig. 4B at 47, and fall back into the storage bin. Preferably, the belt 40 is wider than the trays 43, so that the falling shrimp are guided back, as it were, to the storage 27 by the belt.

When the trays 43 pass the upper return pulley 41, the shrimp carried along fall from the reversing trays.

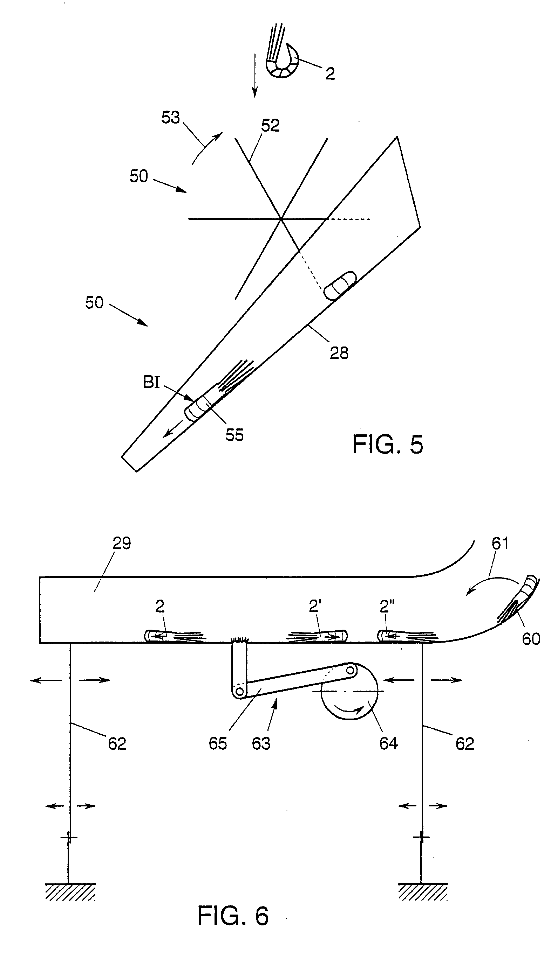

The shrimp thus falling down on the rear side of the vertical conveyor are received by suitable receiving means. Fig. 5 schematically shows an example of suitable receiving means 50. In the example shown, the receiving means comprise a blade wheel 51, rotating in operation, having a number of radial blades 52. The direction of rotation is indicated by an arrow 53. The shrimp 2 falling from the trays, not shown in Fig. 5, of the vertical conveyor are received between the blades 52, radial in this example, of a rotating blade wheel 50. The blade wheel slows down the shrimp and provides that the shrimp end up in a downwardly inclined sliding chute 28 in such a manner that a considerable part of the shrimp slide downwards through the chute 28 with their backs pointing forwards, as is shown at 55 in Fig. 5. It also occurs that the shrimp slide downwards with their backs pointing backwards, but owing to the use of the blade wheel and the sliding chute, transversely positioned shrimp are substantially avoided. To prevent adhesion and congestions, the sliding chute or, if necessary, the assembly of sliding chute and blade wheel, can optionally be coupled to a vibrating device, not further shown.

As is shown in Fig. 3, the sliding chute 28 opens into or precisely above an approximately horizontal directing chute 29. The directing chute 29 is designed as a vibrating chute, spring-mounted and connected to a vibrating mechanism, vibrating the chute in the longitudinal direction thereof, as is indicated in Fig. 3 by an arrow 54. In the example shown, the vibrating chute has an approximately semicircular cross section and has its inside provided with a rough surface. The rough surface can be obtained in a simple manner for instance by providing emery cloth in the chute. Experiments have shown that the direction of travel of shrimp through a vibrating chute such as the vibrating chute indicated at 29, having a rough inside surface, depends on the position of the shrimp in the chute. When this chute is vibrating, the shrimp move through the chute with their backsides in leading position. This means that the shrimp falling into the vibrating chute with their backs in leading position move towards one end of the chute, whereas the shrimp falling into the vibrating chute with their heads and tails in leading position move towards the other end of the chute. Hence, the vibrating chute is capable of separating the properly positioned shrimp 2 from the shrimp 2' lying with their backs in trailing position. In the example shown, it is desired that the shrimp whose backs are in leading position are delivered by the vibrating chute at one end thereof. The other shrimp 2', whose backs are in trailing position, are delivered at the other end of the vibrating chute and could for instance be fed back to the storage 27 or to a reversing device and then fed, directly or indirectly, to the conveyor belt 10. Preferably, the shrimp whose backs are in trailing position are turned round at the rear end of the vibrating chute, enabling those shrimp to be as yet conveyed in the desired direction and in the desired position through the vibrating chute. It has been found that the desired reversal can be effected in a simple manner by providing the vibrating chute with a rear end 60 having a flowing, upwardly curved configuration, as is shown in Fig. 6, with the rough inside surface of the vibrating chute continuing at least partly in the upwardly bent end 60. The shrimp whose backs are in trailing position and which hence move towards the end 60 of the vibrating chute, creep upwards in the bent-up end of the chute and then fall over, as experiments have demonstrated, in such a manner that the shrimp then come to lie in the vibrating chute with their backs in leading position, as is indicated at 2''. The reversing process is schematically indicated in broken lines and by arrows 61.

The vibrating chute can be mounted in various manners. In the example shown in Fig. 6, the vibrating chute is disposed on vertical spring supports 62, which may for instance at least partly consist of leaf springs. Further, in the example shown, the vibrating chute is coupled to an eccentric device 63, comprising a crank arm 65 mounted on an eccentric projection of a rotating crank 64, which crank arm is in turn connected to the vibrating chute.

The vibrating chute delivers the shimps, fed with their backs in leading position, to positioning means 30 (Fig. 3). In the example shown, the positioning means comprise a short conveyor belt 68 having transverse partitions 67, which short conveyor belt 68 is provided above the starting section 25 of the conveyor belt 10. Instead of a short conveyor belt, a bladed wheel or the like can also be used. By the directing chute, the shrimp are deposited with their backs in leading position on the conveyor belt 68, between the partitions 67. The conveying direction of the belt 68 is indicated by an arrow 69 and is chosen so that the top path of the belt 68 has a direction of travel opposite to that of the conveyor belt 10. In one reversing path, the short conveyor belt connects to a bent plate 70, located at such a distance from the short belt that the free edges of the partitions extend precisely to the plate 70. Hence, in the reversing path of the short conveyor belt, the shrimp lying between the partitions cannot fall from the compartments formed by the partitions and, although they lie on the bent plate 70 in and beyond the reversing path, they are also carried along over the plate 70 by the partitions. The plate 70 ends just above the belt 10 and further comprises guide means 71, for instance grooves, ridges, incisions or the like, guiding the shrimp carried along over the plate in the direction of one longitudinal edge of the conveyor belt 10 while maintaining the orientation of the shrimp. In this manner, it can be effected that the position of the shrimp obtained by means of the vibrating chute is maintained, while the shrimp are transferred from the vibrating chute to the conveyor belt 10, and that the shrimp also come to lie with their backs along one longitudinal edge of the coveyor belt.

As is described hereinabove, the shrimp are then conveyed between the belts 10 and 22 to the peeling zone 11, optionally via one or more cut-in stations. In the peeling zone, the shrimp are peeled by means of a press member in the manner described. In the example shown in Fig. 3, the press member comprises a roller 75 which is reciprocable transversely to the conveying direction, over the backside 78 of the bottom path of the upper conveyor belt, as is indicated by an arrow 76. The reciprocation can for instance be obtained by a crank mechanism 77.

To prevent the roller from unduly compressing and, consequently, damaging the shrimp to be peeled, the roller can for instance comprise raised end edges, or the outer ends of the axle 79 (Fig. 1) of the roller can be held at a predetermined minimum distance from the top face of the conveyor 10 by guide members not further shown.

It is observed that after the foregoing, various modifications will readily occur to a person skilled in the art. For instance, it is not strictly necessary to use a second belt, i.e. the upper belt 22. Also, instead of endless belts, other types of conveyors can in principle be used. Of the feed and positioning means described, many equivalents are conveivable.

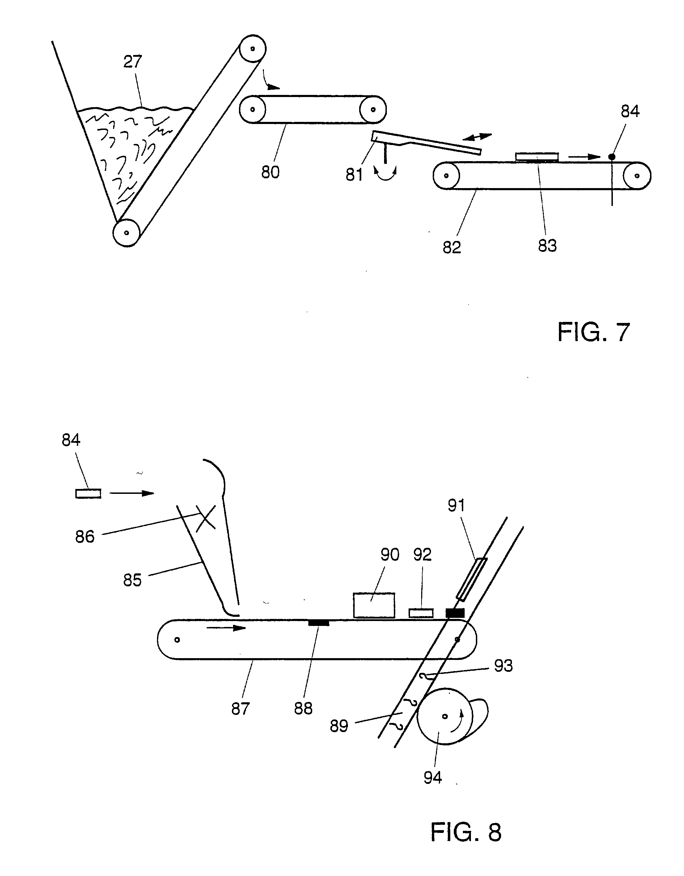

For instance, a vertical conveyor of the above-described type or any other type can be followed by a small conveyor belt 80 as is schematically shown in Fig. 7. The belt 80 receives the shrimp fed by the vertical conveyor and deposits them in a downwardly inclined and downwardly narrowed shaking chute 81, which (also) carries out a vibrating motion in lateral direction. This causes the shrimp to lie one behind the other. The shaking chute 81 opens above a conveyor belt 82 which runs relatively fast, as a result of which a certain interspace is formed between the successive shrimp. The shrimp are detected by, for instance, a photocell 83 and then blown from the conveyor belt laterally, for instance by an air valve 84 controlled by the signals from the photocell. Preferably, after the detection of a shrimp, the photocell has a preset dead time, during which a next shrimp cannot be detected. Accordingly, such next shrimp which follows a preceding shrimp too fast is not blown from the belt and, at the end of the belt, falls into a receiving bin or the like or directly into the storage bin 27.

The shrimp which are indeed blown from the belt or shifted from the belt in another manner fall into a receiving chute or funnel (Fig. 8) or the like and slide downwards, via a braking wheel 86, onto a conveyor belt 87 made of wire mesh or the like. Located under the conveying path of the conveyor belt 87 is a slot-shaped suction nozzle 88, extending obliquely relative to the conveying direction. Via the suction nozzle, a suction force is exerted on the shrimp conveyed over the suction nozzle. As a result, shrimp whose round backs are not in leading position are turned, so that eventually all shrimp have their round backs in leading position. The thus directed shrimp are then transferred to a conveyor belt 89 which may be the conveyor belt 25 of Fig. 3 and which extends for instance transversely to the belt 87. This may for instance take place by means of a roller 90, pushing the shrimp to the edge of the belt 87, and a sliding member 91 possibly preceded by a detector 92.

The shrimp should lie with their round backs along the longitudinal edge of the conveyor belt. In the case where shrimp nevertheless lie precisely the other way round, i.e. with their heads at the longitudinal edge, as shown at 93, these shrimp can for instance be pulled away by means of two discs 94, rotating obliquely relative to each other.

Further, the apparatus described can in practice comprise cleaning means, such as for instance rotating brushes, water sprayers and the like for the belts and/or the chutes. Also, detection means, such as feelers or an electronic eye or the like may be provided to detect the shrimp fed on the belt 10 and to adjust the movement of the press member to the feed of shrimp.

Further, it is not strictly necessary that the shrimp to be peeled lie at the longitudinal edge of the conveyor 10. If the peeled shrimp and the remaining shells lie in different zones on the conveyor 10, it is possible to separate the shrimp and the shells only later, for instance at the reversing path of the conveyor 10.

These and similar modifications and equivalents are understood to fall within the framework of the invention.

## Claims

1. A method for peeling shrimp, **characterized in that** the shrimp to be peeled are placed in curved form on a supporting surface and that a shifting pressure force is exerted on each of the shrimp by means of a press member, which pressure force moves from the head and tail located on one side of the curved shrimp in the direction of the back, with the armature of the shrimp opening on the backside and the meat being squeezed from the armature.

2. A method according to claim 1, **characterized in that** prior to the exertion of the pressure force, the shrimp have their backsides provided with an incision.

3. A method according to claim 1 or 2, **characterized in that** as press member, a member having a bent surface is used, the radius of the bent surface being relatively great compared with the section of the shrimp to be peeled.

4. A method according to any one of the preceding claims, **characterized in that** during the exertion of the pressure force, the shrimp to be peeled lie at the edge of the supporting surface and that the peeled shrimp are received by means of receiving means disposed next to the supporting surface.

5. A method according to any one of the preceding claims, **characterized in that** the shrimp are successively fed, by means of a conveyor, to a peeling zone comprising the supporting surface.

6. A method according to claim 5, **characterized in that** the shrimp are passed through the peeling zone while lying and being retained between a lower and an upper conveyor belt.

7. A shrimp peeling apparatus **characterized by** a peeling zone, a substantially horizontal supporting surface for supporting the curved shrimp to be peeled in said peeling zone, conveyor means for successively feeding shrimps to the peeling zone, and a press member positioned above the supporting surface in the peeling zone, said press member being movably arranged with respect to the supporting surface and a shrimp positioned on the supporting surface for gradually compressing said shrimp between the member and the supporting surface from the head and tail towards the back of the shrimp whereby the meat of the shrimp is squeezed out of its armature.

8. An apparatus according to claim 7, **characterized in that** the press member has a curved portion whereby the pressure force is exerted, said curved portion having a radius which is relatively great compared with the section of a shrimp.

9. An apparatus according to claim 7 or 10, **characterized in that** the supporting surface is provided with friction-increasing means.

10. An apparatus according to any one of claims 7-9, **characterized in that** the press member comprises a bent surface having friction-increasing means.

11. An apparatus according to any one of claims 7-10, **characterized in that** the press member comprises a reciprocable roller and driving means for the roller.

12. An apparatus according to any one of the preceding claims, **characterized in that** the conveyor for feeding shrimp to the peeling zone extends beyond the peeling zone.

13. An apparatus according to claim 12, **characterized by** an endless belt mounted at least in the peeling zone above the conveyor, the bottom path of which endless belt is located directly above the conveyor, enabling a shrimp to be retained and conveyed between the conveyor and the endless belt at least in the peeling zone.

14. An apparatus according to claim 13, **characterized in that** the press member operates on the rear side of the bottom path of the endless belt.

15. An apparatus according to any one of claims 12-14, **characterized by** positioning means which position the shrimp to be peeled on the conveyor so that the backs of the shrimp lie along a longitudinal edge of the conveyor.

16. An apparatus according to any one of the preceding claims, **characterized by** at least one cutting station for providing an incision in the back of a shrimp to be peeled, said cutting station being disposed upstream of the peeling zone.

17. An apparatus according to any one of the preceding claims, **characterized by** means limiting the pressure exerted by the press member on a shrimp to be peeled.

18. An apparatus according to claim 17, **characterized in that** said means comprise raised end edges of the press member.

19. An apparatus according to claim 17, **characterized in that** said means comprise guide members for one or more projections of the press member.

## Patentansprüche

1. Verfahren zum Schälen von Garnelen, **dadurch gekennzeichnet, dass** die zu schälenden Garnelen in gekrümmter Form auf einer Auflagefläche platziert werden und dass mit einem Drückteil auf jede der Garnelen eine Schiebedrückkraft ausgeübt wird, die sich von dem Kopf und dem Schwanz, die an einer Seite der gekrümmten Garnele angeordnet sind, in der Richtung auf den Rücken hin bewegt, wobei sich der Panzer der Garnele an der Rückenseite öffnet und das Fleisch aus dem Panzer herausgedrückt wird.

2. Verfahren nach Anspruch 1, **dadurch gekennzeichnet, dass** vor dem Ausüben der Drückkraft die Garnelen an der Rückenseite mit einem Einschnitt versehen werden.

3. Verfahren nach Anspruch 1 oder 2, **dadurch gekennzeichnet, dass** als Drückteil ein Teil mit einer gekrümmten Oberfläche verwendet wird, wo-, bei der Radius der gekrümmten Oberfläche im Vergleich mit der Schnittfläche der zu schälenden Garnele relativ groß ist.

4. Verfahren nach einem der vorherigen Ansprüche, **dadurch gekennzeichnet, dass** während der Ausübung der Drückkraft die zu schälenden Garnelen an dem Rand der Auflagefläche liegen und dass die zu schälenden Garnelen von neben der Auflagefläche angeordneten Aufnahmevorrichtungen aufgenommen werden.

5. Verfahren nach einem der vorherigen Ansprüche, **dadurch gekennzeichnet, dass** die Garnelen mittels eines Förderers sukzessive einer Schälzone zugeführt werden, die die Auflagefläche aufweist.

6. Verfahren nach Anspruch 5, **dadurch gekennzeichnet, dass** sich die Garnelen beim Durchlaufen der Schälzone im liegenden Zustand befinden und zwischen einem unteren und einem oberen Förderband gehalten werden.

7. Garnelenschälvorrichtung, **gekennzeichnet durch** eine Schälzone, eine im wesentlichen horizontale Auflagefläche, um die in der Schälzone zu schälenden gekrümmten Garnelen zu stützen, einer Fördervorrichtung zum sukzessiven Zuführen von Garnelen zu der Schälzone, und einem über der Auflagefläche in der Schälzone positionierten Drückteil, das in bezug auf die Auflagefläche und eine auf der Auflagefläche positionierte Garnele derart bewegbar angeordnet ist, dass es die Garnele zwischen dem Teil und der Auflagefläche vom Kopf und Schwanz her zum Rücken der Garnele hin allmählich zusammendrückt, wodurch das Fleisch der Garnele aus ihrem Panzer gedrückt wird.

8. Vorrichtung nach Anspruch 7, **dadurch gekennzeichnet, dass** das Drückteil einen gekrümmten Abschnitt aufweist, mit dem die Drückkraft ausgeübt wird, wobei der Radius des gekrümmten Abschnitts im Vergleich mit der Schnittfläche einer Garnele relativ groß ist.

9. Vorrichtung nach Anspruch 7 oder 10, **dadurch gekennzeichnet, dass** die Auflagefläche mit einer reibungserhöhenden Vorrichtung versehen ist.

10. Vorrichtung nach einem der Ansprüche 7-9, **dadurch gekennzeichnet, dass** das Drückteil eine gekrümmte Fläche mit einer reibungserhöhenden Vorrichtung aufweist.

11. Vorrichtung nach einem der Ansprüche 7-10, **dadurch gekennzeichnet, dass** das Drückteil eine hin- und herbewegbare Rolle und eine Antriebsvorrichtung für die Rolle aufweist.

12. Vorrichtung nach einem der vorhergehenden Ansprüche, **dadurch gekennzeichnet, dass** sich der zum Zuführen der Garnelen zu der Schälzone vorgesehene Förderer über die Schälzone hinaus erstreckt.

13. Vorrichtung nach Anspruch 12, **gekennzeichnet durch** ein Endlosband, das mindestens in der Schälzone über dem Förderer befestigt ist, wobei , der untere Trum des Endlosbands direkt über dem Förderer angeordnet ist, so dass eine Garnele mindestens in der Schälzone zwischen dem Förderer und dem Endlosband gehalten und transportiert werden kann.

14. Vorrichtung nach Anspruch 13, **dadurch gekennzeichnet, dass** das Drückteil auf der Rückseite des unteren Trums des Endlosbands arbeitet.

15. Vorrichtung nach einem der Ansprüche 12-14, **gekennzeichnet durch** Positionierungsvorrichtungen, die die zu schälenden Garnelen derart auf den Förderer positionieren, dass die Rücken der Garnelen entlang eines Längsrands des Förderers liegen.

16. Vorrichtung nach einem der vorhergehenden Ansprüche, **gekennzeichnet durch** mindestens eine Schneidstation zum Anbringen eines Einschnitts am Rücken der zu schälenden Garnelen, wobei die Schneidstation stromaufwärts der Schälzone angeordnet ist.

17. Vorrichtung nach einem der vorhergehenden Ansprüche, **gekennzeichnet durch** eine Druckbegrenzungsvorrichtung, die den **durch** das Andrückteil auf eine zu schälende Garnele ausgeübten Druck begrenzt.

18. Vorrichtung nach Anspruch 17, **dadurch gekennzeichnet, dass** die Druckbegrenzungsvorrichtung abstehende Endränder des Drückteils aufweist.

19. Vorrichtung nach Anspruch 17, **dadurch gekennzeichnet, dass** die genannte Vorrichtung Führungsteile für einen oder mehrere Vorsprünge des Drückteils aufweist.

## Revendications

1. Procédé de décortication de crevettes, **caractérisé en ce que** les crevettes à décortiquer sont placées sous forme courbe sur une surface de support, et **en ce qu'**une force de pression de déplacement est exercée sur chacune des crevettes à l'aide d'un organe de pression, la force de pression se déplaçant depuis la tête et le queue disposées d'un premier côté de la crevette courbe dans la direction du dos, la carapace de la crevette s'ouvrant du côté du dos et la chair étant chassée par serrage de la carapace.

2. Procédé selon la revendication 1, **caractérisé en ce que**, avant l'application de la force de pression, une incision est formée du côté du dos des crevettes.

3. Procédé selon la revendication 1 ou 2, **caractérisé en ce qu'**un organe ayant une surface courbe est utilisé comme organe de pression, le rayon de la surface courbe étant relativement grand par rapport à la section des crevettes à décortiquer.

4. Procédé selon l'une quelconque des revendications précédentes, **caractérisé en ce que**, pendant l'application de la force de pression, les crevettes à décortiquer sont placées sur le bord de la surface de support, et **en ce que** les crevettes à décortiquer sont logées par un dispositif de réception placé près de la surface de support.

5. Procédé selon l'une quelconque des revendications précédentes, **caractérisé en ce que** les crevettes avancent successivement sous la commande d'un transporteur vers une zone de décortication comprenant la surface de support.

6. Procédé selon la revendication 5, **caractérisé en ce que** les crevettes passent dans la zone de décortication en étant couchées et en étant retenues entre des courroies transporteuses inférieure et supérieure.

7. Appareil de décortication de crevettes, **caractérisé par** une zone de décortication, une surface de support pratiquement horizontale destinée à supporter les crevettes courbes à décortiquer dans la zone de décortication, un dispositif de transport destiné à faire avancer successivement les crevettes vers la zone de décortication, et un organe de pression placé au-dessus de la surface de support dans la zone de décortication, l'organe de pression étant disposé afin qu'il soit mobile par rapport à la surface de support et à une crevette placée sur la surface de support afin qu'il comprime progressivement la crevette entre ledit organe et la surface de support depuis la tête et la queue vers le dos de la crevette, si bien que la chair de la crevette est chassée de la carapace par serrage.

8. Appareil selon la revendication 7, **caractérisé en ce que** l'organe de pression a une partie courbe par laquelle la force de pression est exercée, la partie courbe ayant un rayon relativement grand par rapport à la section d'une crevette.

9. Appareil selon la revendication 7 ou 10, **caractérisé en ce que** la surface de support a un dispositif d'augmentation de pression.

10. Appareil selon l'une quelconque des revendications 7 à 9, **caractérisé en ce que** l'organe de pression a une surface courbe possédant un dispositif d'augmentation de frottement.

11. Appareil selon l'une quelconque des revendications 7 à 10, **caractérisé en ce que** l'organe de pression comporte un rouleau alternatif et un dispositif d'entraînement du rouleau.

12. Appareil selon l'une quelconque des revendications précédentes, **caractérisé en ce que** le transporteur destiné à faire avancer les crevettes vers la zone de décortication s'étend au-delà de la zone de décortication.

13. Appareil selon la revendication 12, **caractérisé par** une courroie sans fin montée au moins dans la zone de décortication au-dessus du transporteur, le trajet inférieur de la courroie sans fin étant juste au-dessus du transporteur et permettant la retenue et le transport d'une crevette entre le transporteur et la courroie sans fin au moins dans la zone de décortication.

14. Appareil selon la revendication 13, **caractérisé en ce que** l'organe de pression agit à la face arrière du trajet inférieur de la courroie sans fin.

15. Appareil selon l'une quelconque des revendications 12 à 14, **caractérisé par** un dispositif de positionnement qui positionne la crevette à décortiquer sur le transporteur afin que les dos des crevettes soient disposés le long d'un bord longitudinal du transporteur.

16. Appareil selon l'une quelconque des revendications précédentes, **caractérisé par** au moins un poste de coupe destiné à former une incision au dos d'une crevette à décortiquer, le poste de coupe étant placé en amont de la zone de décortication.

17. Appareil selon l'une quelconque des revendications précédentes, **caractérisé par** un dispositif destiné à limiter la pression exercée par l'organe de pression sur une crevette à décortiquer.

18. Appareil selon la revendication 17, **caractérisé en ce que** ledit dispositif comprend des bords d'extrémité de l'organe de pression en saillie.

19. Appareil selon la revendication 17, **caractérisé en ce que** ledit dispositif comprend des organes de guidage d'une ou plusieurs saillies de l'organe de pression.
